# EUROPÄISCHE PATENTSCHRIFT

(11) **EP 0 420 080 B1**
(45) Veröffentlichungstag und Bekanntmachung des Hinweises auf die Patenterteilung: **24.02.1993**
(21) Anmeldenummer: 90118233.7
(22) Anmeldetag: 22.09.1990
(51) Int. Cl.: F23Q 7/00

(54) **Elektrisches Glühelement**
Electric glow element
Elément à incandescence électrique

(30) Priorität: 29.09.1989 DE 3932605
(43) Veröffentlichungstag der Anmeldung: 03.04.1991
(73) Patentinhaber: SCHOELLER & CO. Elektrotechnische Fabrik GmbH & Co., D-60559 Frankfurt (DE)
(72) Erfinder: von Gaisberg, Alexander, D-7141 Beilstein (DE); Graeser, Norbert, D-6000 Frankfurt am Main 71 (DE); Merkel, Alfred, D-6078 Neu-Isenburg (DE)

(56) Entgegenhaltungen:
- US-A- 2 694 134
- US-A- 2 975 262
- US-A- 3 238 354

## Beschreibung

Die Erfindung betrifft ein elektrisches Glühelement, insbesondere für einen elektrischen Zigarrenanzünder, nach dem Oberbegriff des Anspruchs 1.

Ein elektrisches Glühelement ist aus der DE-PS 26 36 781 bekannt. Hierin nimmt eine flache Metallschale die als aufheizbares Glühelement dienende Spiralwicklung eines bandförmigen Streifens auf, welcher aus elektrischem Widerstandsmaterial gefertigt und V-förmig profiliert ist. Hierbei wird eine beständige mechanische Befestigung und elektrisch gut leitende Verbindung des äußeren Endabschnitts der Heizspirale mit der Innenfläche der als Halter für die Heizspirale dienenden Metallschale dadurch geschaffen, daß die Stirnseite der Metallschale durch Einwärtsbördeln des Öffnungsrandes gegen den aus der Spiralebene vorstehenden Endabschnitt der Heizspirale gepreßt ist, wobei dieser Endabschnitt zwischen der Innenfläche der Schalenumfangswand und deren Begrenzungskante fest eingeschlossen ist. Da hierbei einerseits nur eine einzige Breitseite des Endabschnitts der Heizspirale mit der Innenfläche der Metallschale in Berührung steht und da andererseits die gegenüberliegende Breitseite des Endabschnitts der Heizspirale mit der Begrenzungskante der Metallschale in Berührung gebracht werden soll, ist zur Befestigung des äußeren Endabschnitts der Heizspirale noch eine relativ komplizierte Bördel- und Einrollverbindung erforderlich. So ist es nachteilig, daß bei der Fertigung der das Glühelement tragenden Metallschale die Kanten der Bodenwandung durch Umbiegen zunächst hochgestellt, d.h. umgebördelt werden und danach ein abgesetzter Flansch ausgebildet wird. Durch nochmaliges Umbördeln und darauffolgendes Einrollen der Begrenzungskante ist es erforderlich, die Begrenzungskante gegenüber der Ebene der Schalenbodenwandung um 360° zu biegen. Das im Stand der Technik offenbarte Seitenwandungsprofil ist somit noch relativ fertigungsaufwendig. Außerdem ist der durch die 360°-Biegung der Begrenzungskante bewirkte Randwulst insbesondere dann nachteilig, wenn die die Heizspirale tragende Metallschale flachbauend gefertigt werden soll.

Die US-Patentschrift 3,161,754 offenbart ebenfalls ein einen Glühspiralennapf nebst Heizleiterspiralband aufweisendes Glühelement für einen elektrischen Zigarrenanzünder. Hierbei ist das äußere Ende 24 des Heizleiterspiralbandes jedoch an der inneren Oberfläche der C-förmig profilierten Seitenwandung des Glühspiralennapfes angeschweißt.

Die französische Offenlegungsschrift FR 24 36 942 offenbart ein elektrisches Glühelement für einen elektrischen Zigarrenanzünder mit einem in einem Glühspiralennapf spiralförmig aufgewickelt liegenden Heizleiterspiralband. Das Heizleiterspiralband steht mit seinem äußeren Ende in mechanischer und elektrischer Verbindung mit dem Glühspiralennapf. Die genauere Art der Verbindung von Heizleiterspiralband mit Glühspiralennapf ist der Entgegenhaltung nicht zu entnehmen.

Es ist Aufgabe der Erfindung, ausgehend vom vorgenannten Stand der Technik und unter Vermeidung der dort genannten Nachteile, sowohl eine mechanisch stabile als auch elektrisch gut leitende Verbindung des äußeren Heizleiterspiralbandendes mit der napfförmigen, das Glühelement aufnehmenden Metallschale zu erreichen.

Diese Aufgabe wird durch die kennzeichnenden Merkmale der nebengeordneten Ansprüche 1 und 2 in vorteilhafter Weise gelöst.

Vorteilhafte Ausführungen und Weiterbildungen des Erfindungsgegenstandes sind in den Unteransprüchen näher gekennzeichnet.

Eine sowohl mechanisch feste als auch elektrisch gut leitende Verbindung des Heizleiterspiralbandendes mit der Glühspiralennapfseitenwandung läßt sich durch die Kombination der erfindungsgemäß gekennzeichneten Merkmale fertigungsvorteilhaft erreichen. Dadurch, daß gemäß einer ersten Ausführungsform in der Glühspiralennapfbodenwandung eine erste Sicke vorgesehen ist und gleichzeitig die Glühspiralennapfseitenwandung leicht napfeinwärts gebogen ist, läßt sich sowohl ein vergleichsweise einfach zu fertigendes Biegeprofil der Glühspiralennapfseitenwand als auch eine sichere Festklemmung - bei gleichzeitig kleinem elektrischen Übergangswiderstand - des zweiten Heizleiterspiralbandendes zwischen der Glühspiralennapfbodenwandung und der Glühspiralennapfseitenwandung erreichen. Die ausgebildete erste Sicke gewährleistet hierbei, daß das in der Mulde einer zweiten Sicke einliegende zweite Heizleiterspiralbandende beim Einziehen der Glühspiralennapfseitenwandung nicht zur Mitte hin ausweicht. Die in der Glühspiralennapfbodenwandung ausgebildete erste Sicke kann selbstverständlich durch technisch gleichwirkende Mittel, wie z.B. Noppen, Nasen oder Napfbodenwandungsausprägungen ersetzt werden. Hierdurch kann das zweite Heizleiterspiralbandende in der zweiten Sicke zuverlässig zwischen der Wandung der ersten Sicke und der Glühspiralennapfseitenwandung positioniert und gegen ein Wegrutschen gesichert werden. Zudem läßt sich durch das napfbodenwandungsseitige Herausführen des zweiten Heizleiterspiralbandendes eine im Vergleich zum bekannten Stand der Technik geringere Höhe des Glühspiralennapfes erreichen, weil erfindungsgemäß die Klemmung des zweiten Heizleiterspiralbandendes unter Zuhilfenahme eines Glühspiralennapfbodenwandungsteils mit einem einzigen gekrümmten Teil der Glühspiralennapfseitenwandung erfolgt, wohingegen im Stand der Technik die Klemmung des Heizleiterbandes an den Breitseiten des Heizleiterbandes mit Hilfe von parallel zu diesen Breitseiten ausgerichteten Teilen der Glühspiralennapfseitenwandung festgeklemmt werden muß.

Insbesondere eine zweite Ausführungsform der erfindungsgemäßen Befestigung des zweiten Heizleiterspiralbandendes, bei welcher das zweite Heizleiterspiralbandende zwischen dem unterhalb der Glühspiralennapfbodenwandung liegenden Boden einer Sicke und einer Innenfläche der Glühspiralennapfbodenwandung eingeklemmt ist, bietet vorteilhaft die Gewähr dafür, daß im Gegensatz zum Stand der Technik, oberhalb der Heizleiterbandspiralwicklung kein Raumbedarf für die Befestigung des Heizleiterspiralbandendes erforderlich ist. Außerdem erlaubt, im Vergleich zur ersten Ausführungsform der Erfindung, insbesondere diese Ausführungsform eine gegenüber dem Heizleiterspiralband verbreiterte Ausbildung des Heizleiterspiralbandendes. Infolge des unterhalb der Glühspiralennapfbodenwandung liegenden Bodens der Sicke gewinnt nämlich die gekrümmte Glühspiralennapfseitenwand an Höhe. Bei gleichfalls verbreiterter Breite des Heizleiterbandendes läßt sich dann das Maß der Biegung der Glühspiralennapfseitenwandung weiter verringern.

Gemäß einer vorteilhaften Weiterbildung kann mindestens eine der Kanten des zweiten Heizleiterspiralbandendes angefast sein. Die hierdurch ausgebildete Schneidkante bewirkt zusätzlich eine mechanisch und elektrische zuverlässigere Klemmung.

Zu einer zuverlässigen Klemmung trägt ebenfalls die nach einer weiteren Ausführungsform vorgesehene wellige Ausbildung des Heizleiterspiralbandendes bei.

Zweckmäßigerweise ist das Heizleiterspiralbandende über mindestens den halben Umfang der äußeren Wicklung des Heizleiterspiralbandes festgeklemmt, was ebenfalls den mechanischen und elektrischen Kontakt verbessert.

Die Erfindung soll nachstehend anhand der schematischen Zeichnung näher beschrieben und erläutert werden.

Es zeigt:
Fig. 1 eine mediane Seitenschnittansicht durch ein Glühelement eines elektrischen Zigarrenanzünders mit einem erfindungsgemäß befestigten Heizleiterspiralbandende nach einer ersten Ausführungsform,
Fig. 2 eine mediane Seitenschnittansicht durch ein Glühelement eines elektrischen Zigarrenanzünders mit einem erfindungsgemäß befestigten Heizleiterspiralbandende nach einer zweiten Ausführungsform.

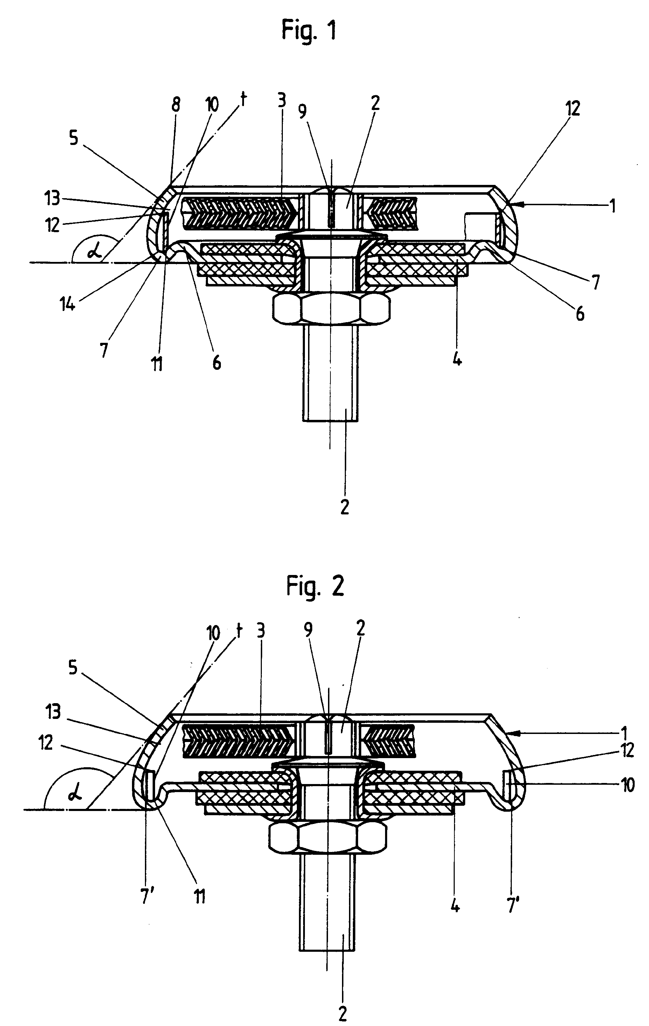

Gemäß einem in Fig. 1 gezeigten ersten Ausführungsbeispiel der Erfindung ist ein Heizleiterspiralband 3 mit einem ersten Heizleiterspiralbandende 9 an einem einen Glühspiralennapf 1 zentral durchgreifenden Kontaktteil 2 festgelegt. Das spiralförmig aufgewickelte Heizleiterspiralband 3 ist aus einem für elektrische Widerstandsheizung geeigneten Material gefertigt und im Querschnitt V-förmig profiliert. Hierdurch ist es in Richtung des Kontaktteils 2 gegen axiale Verschiebung gesichert. Die spiralförmige Wicklung des Heizleiterbandes 3 liegt in einer zu einer Glühspiralennapfbodenwandung 4 parallelen Ebene. In der kreisrunden Glühspiralennapfbodenwandung 4 ist eine peripher umlaufende und napfeinwärts konvex gekrümmte erste Sicke 6 ausgebildet. Unter Ausbildung einer ebenfalls peripher umlaufenden, napfeinwärts konkav gekrümmten zweiten Sicke 7 ist unmittelbar anschließend an die erste Sicke 6 am Ende der Glühspiralennapfbodenwandung 4 eine im Querschnitt C-förmig profilierte Glühspiralennapfseitenwandung 5 napfeinwärts konkav gebördelt. Die Glühspiralennapfseitenwandung 5 ist hierbei napfeinwärts nur soweit gebogen, daß eine an einer Glühspiralennapfseitenwandungsbegrenzungskante 8 gezogene Tangente t mit der Napfbodenwandung 4 einen Biegewinkel 90° < α ≦ 180°, vorzugsweise α= 135° bildet. Hierdurch ist mit einem minimalen für die Napfbiegung erforderlichen Fertigungsaufwand gewährleistet, daß ein zweites Heizleiterspiralbandende 10 mit einer oberen Kante 12 und einer unteren Kante 11 zwischen einer Innenfläche 13 der Glühspiralennapfseitenwandung 5 und dem Boden 14 der zweiten Sicke 7, vorzugsweise über den halben Umfang der äußeren Wicklung des Heizleiterspiralbandes festgeklemmt werden kann. Das zweite Heizleiterspiralbandende 10 ist in diesem Ausführungsbeispiel im Querschnitt rechteckig profiliert. Es kann aber ebenfalls V-förmig profiliert und/oder gewellt ausgebildet sein. Hierdurch ergibt sich eine noch festere und gleichmäßigere Verbindung zwischen dem Heizleiterspiralband 3 und der Glühspiralennapfseitenwandung 5.

Gemäß einem in Fig. 2 gezeigten zweiten Ausführungsbeispiel der Erfindung unterscheidet sich im Vergleich zum ersten Ausführungsbeispiel die Befestigung des zweiten Heizleiterspiralbandendes 10 dadurch, daß in der Glühspiralennapfbodenwandung 4 eine peripher umlaufende und napfeinwärts konkav gekrümmte Sicke 7′ vorgesehen ist, wodurch der Boden 14 der Sicke 7′ unterhalb der Glühspiralennapfbodenwandung 4 zu liegen kommt. Die C-förmig profilierte Glühspiralennapfseitenwandung 5 ist napfeinwärts ebenfalls konkav gebördelt.

## Patentansprüche

1. Elektrisches Glühelement, insbesondere für einen elektrischen Zigarrenanzünder, mit einem ein spiralförmig aufgewickeltes Heizleiterspiralband aufnehmenden sowie eine Glühspiralennapfbodenwandung nebst anschließender, C-förmig napfeinwärts konkav gebördelter Glühspiralennapfseitenwandung aufweisenden Glühspiralennapf, wobei eine an einer Glühspiralennapfseitenwandungsbegrenzungskante gezogene Tangente mit der Glühspiralennapfbodenwandung einen Biegewinkel 90° < α ≦ 180° bildet, und wobei ein erstes Heizleiterspiralbandende an einem zentral die Glühspiralennapfbodenwandung durchgreifenden Kontaktteil festgelegt und ein zweites Heizleiterspiralbandende zwischen Wandungsteilen des Glühspiralennapfes festgeklemmt ist, dadurch gekennzeichnet, daß in der Glühspiralennapfbodenwandung (4) eine peripher umlaufende und napfeinwärts konvex gekrümmte erste Sicke (6) vorgesehen ist, daß anschließend eine peripher umlaufende und napfeinwärts konkav gekrümmte zweite Sicke (7) vorgesehen ist, daß das zweite Heizleiterspiralbandende (10) aus der zur Glühspiralennapfbodenwandung (4) parallelen Spiralebene napfbodenwandungsseitig herausgeführt ist und daß mindestens eine untere Kante (11) sowie mindestens eine obere Kante (12) des zweiten Heizleiterspiralbandendes (10) zwischen einem Boden (14) der zweiten Sicke (7) und einer Innenfläche (13) der an die zweite Sicke (7) anschließenden Glühspiralennapfseitenwandung (5) festgeklemmt ist.

2. Elektrisches Glühelement nach dem Oberbegriff des Anspruchs 1, dadurch gekennzeichnet, daß am Übergang von der Glühspiralennapfbodenwandung (4) zur Glühspiralennapfseitenwandung (5) eine peripher umlaufende und napfeinwärts konkav gekrümmte Sicke (7′) vorgesehen ist, wobei ein Boden (14) der Sicke (7′) unterhalb der Glühspiralennapfbodenwandung (4) zu liegen kommt, daß das zweite Heizleiterspiralbandende (10) aus der zur Glühspiralennapfbodenwandung (4) parallelen Spiralebene napfbodenwandungsseitig herausgeführt ist und daß mindestens eine untere Kante (11) sowie mindestens eine obere Kante (12) des zweiten Heizleiterspiralbandendes (10) zwischen dem Boden (14) der Sicke (7′) und einer Innenfläche (13) der unmittelbar an die Sicke (7′) anschließenden Glühspiralennapfseitenwandung (5) festgeklemmt ist.

3. Elektrisches Glühelement nach Anspruch 1 oder 2, dadurch gekennzeichnet, daß der Biegewinkel α = 135° beträgt.

4. Elektrisches Glühelement nach einem der vorhergehenden Ansprüche, dadurch gekennzeichnet, daß das Heizleiterspiralband (3) im Querschnitt rechteckig oder V-förmig profiliert ist.

5. Elektrisches Glühelement nach einem der vorhergehenden Ansprüche, dadurch gekennzeichnet, daß das zweite Heizleiterspiralbandende (10) rechteckig oder V-förmig profiliert ist.

6. Elektrisches Glühelement nach einem der vorhergehenden Ansprüche, dadurch gekennzeichnet, daß das zweite Heizleiterspiralbandende (10) gewellt ist.

7. Elektrisches Glühelement nach einem der vorhergehenden Ansprüche, dadurch gekennzeichnet, daß das zweite Heizleiterspiralbandende (10) mindestens über den halben Umfang der äußeren Wicklung des Heizleiterspiralbands festgeklemmt ist.

8. Elektrisches Glühelement nach einem der vorhergehenden Ansprüche, dadurch gekennzeichnet, daß das zweite Heizleiterspiralbandende (10) breiter als das Heizleiterspiralband (3) ist.

9. Elektrisches Glühelement nach einem der vorhergehenden Ansprüche, dadurch gekennzeichnet, daß mindestens eine der Kanten (10,11) des zweiten Heizleiterspiralbandendes (10) unter Ausbildung einer Schneidkante angefast ist.

## Claims

1. Electric heating element, more especially for an electric cigar lighter, having a cup, which accommodates a spirally wound heating conductor spiral strip, and includes a cup base wall together with a cup lateral wall, which communicates with said base wall and is flanged in a C-shaped manner so as to be concave on the inside of the cup, wherein a tangent to an edge of the cup lateral wall, forms a bending angle of 90° < α ≦ 180° with the cup base wall, and wherein a first end of the heating conductor spiral strip is secured on a contact member, which extends centrally through the cup base wall, and a second end of the heating conductor spiral strip is firmly clamped between wall portions of the cup, characterised in that a peripheral circumferential first channel (6), which is convexly curved on the inside of the cup, is provided in the cup base wall (4), in that a peripheral circumferential second channel (7), which is concavely curved on the inside of the cup, is provided, in that the second end (10) of the heating conductor spiral strip extends, at the cup base wall end, from the spiral plane parallel to the cup base wall (4), and in that at least one lower edge (11) and at least one upper edge (12) of the second end (10) of the heating conductor spiral strip are firmly clamped between the base (14) of the second channel (7) and the internal surface (13) of the cup lateral wall (5) communicating with the second channel (7).

2. Electric heating element according to the preamble of claim 1, characterised in that a peripheral circumferential channel (7′), which is concavely curved on the inside of the cup, is provided at the transitional region between the cup base wall (4) and the cup lateral wall (5), wherein the base (14) of the channel (7′) extends beneath the cup base wall (4), in that the second end (10) of the heating conductor spiral strip extends at the cup base wall end from the spiral plane parallel to the cup base wall (4), and in that at least one lower edge (11) and at least one upper edge (12) of the second heating conductor spiral strip end (10) are firmly clamped between the base (14) of the channel (7′) and the internal surface (13) of the cup lateral wall (5) communicating directly with the channel (7′).

3. Electric heating element according to claim 1 or 2, characterised in that the bending angle α is equal to 135°.

4. Electric heating element according to one of the preceding claims, characterised in that the heating conductor spiral strip (3) has a rectangular or V-shaped cross-sectional configuration.

5. Electric heating element according to one of the preceding claims, characterised in that the second end (10) of the heating conductor spiral strip has a rectangular or V-shaped configuration.

6. Electric heating element according to one of the preceding claims, characterised in that the second end (10) of the heating conductor spiral strip is corrugated.

7. Electric heating element according to one of the preceding claims, characterised in that the second end (10) of the heating conductor spiral strip is firmly clamped over at least half the circumference of the outer winding of the heating conductor spiral strip.

8. Electric heating element according to one of the preceding claims, characterised in that the second end (10) of the heating conductor spiral strip is wider than the heating conductor spiral strip (3).

9. Electric heating element according to one of the preceding claims, characterised in that at least one of the edges (11, 12) of the second end (10) of the heating conductor spiral strip is chamfered so as to form a cutting edge.

## Revendications

1. Elément électrique à incandescence, notamment pour allume-cigare électrique, comportant une cuvette qui loge un ruban conducteur chauffant enroulé en spirale et qui comprend une paroi de fond et une paroi latérale adjacente recourbée en C, à concavité tournée vers l'intérieur de la cuvette, une tangente menée par le bord de cette paroi latérale faisant avec cette paroi de fond un angle 90°<α≦180°, une première extrémité du ruban chauffant étant fixée à une pièce de contact qui traverse la paroi de fond en son centre, et la seconde extrémité de ce ruban chauffant étant pincée entre les parois de la cuvette, élément caractérisé en ce qu'une première nervure (6) périphérique continue, à convexité tournée vers l'intérieur de la cuvette, est formée dans la paroi (4) de fond ; en ce qu'il est prévu une seconde nervure (7) périphérique continue adjacente, à concavité tournée vers l'intérieur de la cuvette ; en ce que la seconde extrémité (10) du ruban chauffant est déportée, vers la paroi de fond, du plan de la spirale, parallèle à cette paroi de fond (4) ; et en ce qu'au moins le bord supérieur (12) ainsi qu'au moins le bord inférieur (11) de cette seconde extrémité (10) du ruban chauffant sont immobilisés entre un fond (14) de la seconde nervure (7) et une face intérieure (13), adjacente à cette seconde nervure (7), de la paroi latérale (5) de la cuvette.

2. Elément électrique à incandescence selon le préambule de la revendication 1, caractérisé en ce qu'une nervure (7′) périphérique continue, à concavité tournée vers l'intérieur de la cuvette, est formée à la jonction de la paroi de fond (4) avec la paroi latérale (5) de cette cuvette, un fond (14) de cette nervure (7′) se trouvant plus bas que cette paroi de fond (4) ; en ce que la seconde extrémité (10) du ruban chauffant est déportée, vers la paroi de fond, du plan de la spirale, parallèle à cette paroi de fond (4), et en ce qu'un bord inférieur (11) au moins ainsi qu'un bord supérieur (12) au moins de cette seconde extrémité (10) du ruban chauffant est immobilisé entre le fond (14) de la nervure (7′) et un face intérieure (13), adjacente à cette nervure (7′), de la paroi latérale (5) de la cuvette.

3. Elément électrique à incandescence selon l'une des revendications 1 ou 2, caractérisé en ce que l'angle de pliage α=135°.

4. Elément électrique à incandescence selon l'une des revendications précédentes, caractérisé en ce que la bande conductrice chauffante a en coupe un profil rectangulaire ou en V.

5. Elément électrique à incandescence selon l'une des revendications précédentes, caractérisé en ce que la seconde extrémité (10) du ruban conducteur chauffant a en coupe un profil rectangulaire ou en V.

6. Elément électrique à incandescence selon l'une des revendications précédentes, caractérisé en ce que la seconde extrémité (10) du ruban conducteur chauffant est ondulée.

7. Elément électrique à incandescence selon l'une des revendications précédentes, caractérisé en ce que la seconde extrémité (10) du ruban conducteur chauffant est immobilisée sur au moins la moitié du périmètre de la spire extérieure de la spirale.

8. Elément électrique à incandescence selon l'une des revendications précédentes, caractérisé en ce que la seconde extrémité (10) du ruban conducteur chauffant est plus large que la spirale formée par ce ruban (3).

9. Elément électrique à incandescence selon l'une des revendications précédentes, caractérisé en ce que l'un au moins des bords (11, 12) de la seconde extrémité (10) du ruban conducteur chauffant est biseauté et forme une arête coupante.
